# EUROPEAN PATENT APPLICATION

(11) **EP 4 620 600 A1**
(43) Date of publication of application: **24.09.2025**
(21) Application number: 25156318.5
(22) Date of filing: 06.02.2025
(51) Int. Cl.: B23B 27/04, B23B 27/16

(54) **CUTTING INSERT AND CUTTING TOOL**

(30) Priority: 12.03.2024 JP 2024038165
(71) Applicant: Tungaloy Corporation, Iwaki-shi, Fukushima 970-1144 (JP)
(72) Inventor: KONDOU, Yuma, Iwaki-shi, Fukushima, 9701144 (JP); MOCHIZUKI, Katsura, Iwaki-shi, Fukushima, 9701144 (JP); OTSUKA, Jun, Iwaki-shi, Fukushima, 9701144 (JP); CHIDA, Kunihide, Miyota-machi, Nagano, 3890206 (JP)
(74) Representative: Vossius & Partner Patentanwälte Rechtsanwälte mbB

(57) **Abstract**

The present invention provides a cutting insert that includes a first end surface, a second end surface, and a peripheral side surface that connects the first end surface and the second end surface and includes a cutting edge, in which: a contour shape of each of the first end surface and the second end surface has a longitudinal direction and a shorter direction; and a rake surface is provided in at least a portion of the peripheral side surface, the rake surface facing the longitudinal direction of each of the first end surface and the second end surface.

## Description

### Background

### Field

The present invention relates to a cutting insert and a cutting tool.

### Description of Related Art

The cutting inserts that are described in WO2016/093275A1, JP2002-018605 A and JP2020-506074 A are conventionally known as cutting inserts that are used for a parting process, etc. using an automatic lathe.

The cutting insert described in WO2016/093275A1 is formed in a substantially parallelogram shape and held by a holder, and this cutting insert has, in its leading-end part in the longitudinal direction, a rake surface that faces a direction orthogonal to the longitudinal direction (i.e., in a lateral direction). This related art discloses, as an example, a cutting insert that is held at a leading-end part of the holder in a state in which such cutting insert protrudes outward in the longitudinal direction of the holder.

The cutting insert described in WO2016/093275A1 discloses a contour shape of the cutting insert according to the present invention. The holder described in WO2016/093275A1 can be commonly used for the cutting insert according to the present invention.

The cutting insert described in JP2002-018605 A is formed in a substantially parallelogram shape and held by a holder, and this cutting insert has, in its leading-end part in the longitudinal direction, a rake surface that faces a direction orthogonal to the longitudinal direction (i.e., in a lateral direction). This cutting insert is held at a leading-end part of the holder in a state in which such cutting insert protrudes outward (laterally) in the direction orthogonal to the longitudinal direction of the holder.

Regarding the cutting insert described in JP2020-506074 A, the holder is a long holder and has a thin, plate-shaped blade part, and the cutting insert is inserted into a leading-end part of the plate-shaped blade part in the longitudinal direction, and the cutting insert has a rake surface that faces the longitudinal direction.

However, since the cutting insert described in JP2002-018605 A is held on the holder in a state in which such cutting insert protrudes laterally outwardly from the holder, the space occupied by a cutting tool constituted by such holder and cutting insert becomes large in size. Accordingly, it is difficult to avoid interference between a workpiece and a tool and interference between adjacent tools, the avoidance of which is particularly required for an automatic lathe that is equipped with a large number of cutting tools in order to machine a workpiece into complicated shapes, regardless of its small machine size.

Since the cutting insert described in JP2020-506074 A is small and short in size, such cutting insert is inserted into the long and thin plate-shaped blade part, and such plate-shaped blade part is arranged so as to protrude outward along the longitudinal direction of the holder for use, in order to avoid restrictions in machining diameters for workpieces. Accordingly, it is difficult to secure the stiffness of the cutting tool that includes such cutting insert.

### Summary

An object of the present invention is to improve the stiffness of a cutting tool having a cutting insert and reduce the size of a space that is occupied by such cutting tool.

An aspect of the present invention provides a cutting insert that includes a first end surface, a second end surface, and a peripheral side surface that connects the first end surface and the second end surface and includes a cutting edge, in which: a contour shape of each of the first end surface and the second end surface has a longitudinal direction and a shorter direction; and a rake surface is provided in at least a portion of the peripheral side surface, the rake surface facing the longitudinal direction of each of the first end surface and the second end surface.

In the above aspect of the present invention, the rake surface may be provided in at least a portion of the peripheral side surface on one side and a portion of the peripheral side surface on the other side along the longitudinal direction of each of the first end surface and the second end surface.

In the above aspect of the present invention, the cutting insert may be 180-degrees rotationally symmetrical in a plan view as viewed in a direction orthogonal to the first end surface.

In the above aspect of the present invention, a contour shape of each of the first end surface and the second end surface may be a substantially parallelogram shape having a longitudinal direction and a shorter direction.

In the above aspect of the present invention, the cutting insert may be formed in a mirror-symmetrical shape in a front view as viewed in a direction orthogonal to the first end surface.

In the above aspect of the present invention, the cutting insert may comprise at least one irregularly-formed part formed in an irregular shape, the irregularly-formed part being provided at a portion of the peripheral side surface that intersects with the shorter direction of each of the first end surface and the second end surface.

In the above aspect of the present invention, the rake surface may be located so as to be spaced on an inner side away from a straight line that circumscribes the peripheral side surface along the longitudinal direction of the first end surface.

Another aspect of the invention provides a cutting tool that includes the cutting insert of the above-described aspect of the invention, and a holder on which the cutting insert is held.

In the above aspect of the present invention, the cutting insert may be held at a leading-end part of the holder in a state in which the cutting insert protrudes outwardly along a longitudinal direction of the holder, and the cutting insert may have a rake surface at a leading-end part thereof in a longitudinal direction, the rake surface facing the longitudinal direction.

### [Effect of Invention]

### (Claim 1)

(a) The cutting insert is provided with the rake surface that faces the longitudinal direction of each of the first end surface and the second end surface, in at least a portion of the peripheral side surface. Accordingly, the principal force of the cutting force that acts on the rake surface acts in the longitudinal direction of the cutting insert, and it is difficult to deflect such cutting tool that includes such cutting insert and its stiffness can be improved. In addition, in a machine tool in which a tool post is arranged on the upper side with respect to the central axis of a workpiece, chips are discharged in a direction along the longitudinal direction of the cutting insert (downward), so that the chip control can be improved. It should be noted that the tool post is typically arranged on the upper side in many machine tools.

### (Claims 2-5)

(b) The cutting insert is provided with the rake surfaces in at least portions of the peripheral side surface which are located on one side and the other side in the longitudinal direction of each of the first end surface and the second end surface. Such configuration makes it possible to sequentially use two rake surfaces by re-mounting the cutting insert in the cutting tool, which is economically efficient.

### (Claim 6)

(c) The cutting insert includes at least one irregularly-formed part formed in an irregular shape at a portion of the peripheral side surface which intersects with the shorter direction of each of the first end surface and the second end surface. Such configuration makes it possible to allow the cutting insert to be securely held in the cutting tool without being displaced due to the engagement effect between the above-described irregularly-formed part and an irregularly-formed engaging part that is provided in the cutting tool so as to correspond to the irregularly-formed part, when the principal force of the cutting force that acts on the rake surface acts on the cutting insert in the longitudinal direction thereof.

### (Claim 7)

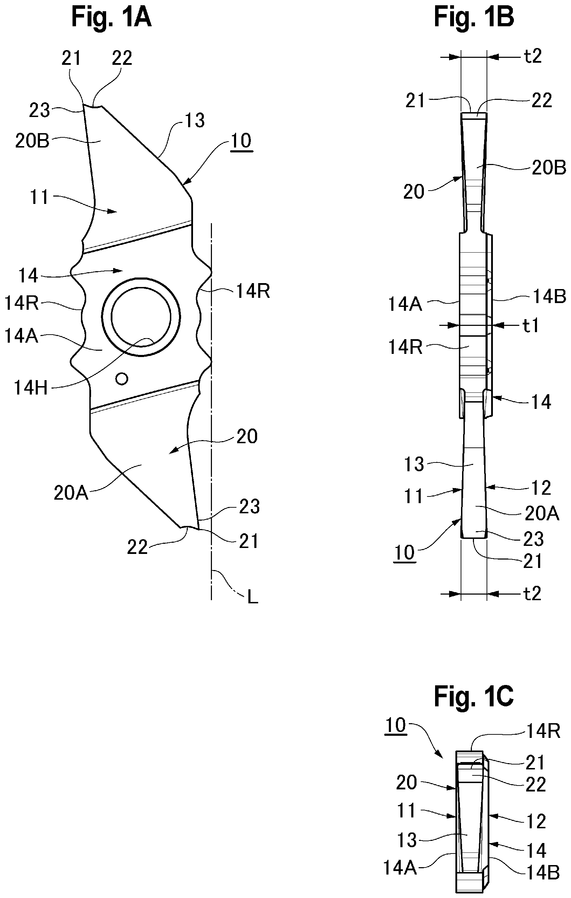

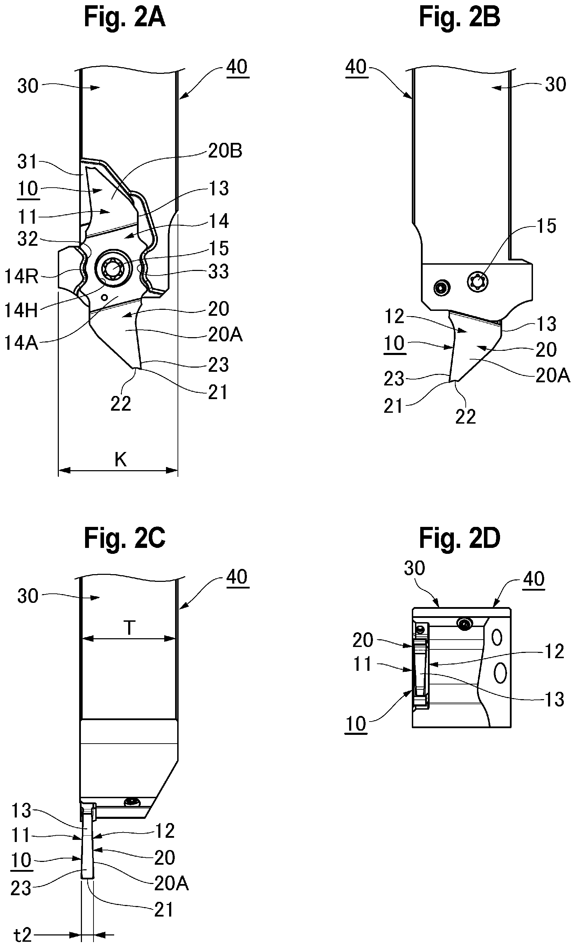

(d) In the cutting insert, the rake surface is spaced on the inner side away from a straight line L (Figs. 1A-1C) that circumscribes the peripheral side surface along the longitudinal direction of the first end surface. Such configuration makes it possible to locate the rake surface of the cutting insert within a width dimension K (Fig. 2A-2D) that intersects the longitudinal direction of a holder, when the cutting insert is mounted on the holder such that the longitudinal direction of the cutting insert is aligned with the longitudinal direction of the holder. Therefore, the cutting process can be performed with part of the workpiece being located within the width dimension K of the holder, which makes it possible to draw even a large workpiece into the space between adjacent cutting tools, to thereby allow a parting process to be performed in a small space.

The force that is applied by the workpiece to the cutting insert only includes compression force, with significantly reduced action of bending force, which is advantageous in terms of stiffness.

### (Claim 8)

(e) In the cutting tool, the above-described advantageous effects (a) to (d) can be achieved.

### (Claim 9)

(f) In the cutting tool, the cutting insert is held at the leading-end part of the holder in a state in which the cutting insert protrudes outwardly along the longitudinal direction of the holder, and the cutting insert has the rake surface at the leading-end part thereof in the longitudinal direction, with the rake surface facing the longitudinal direction. Accordingly, the cutting insert does not protrude laterally from the holder so as to approach the adjacent cutting tool, which makes it possible to reduce the size of the space occupied by the cutting tool that is constituted by the holder and the cutting insert. Therefore, in an automatic lathe, etc. that is installed with a large number of cutting tools for machining a workpiece into complicated shapes, it is possible to easily avoid interference between the workpiece and a tool and interference between adjacent tools.

(g) When holders for a plurality of cutting tools are attached to the tool post provided so as to be movable in two directions orthogonal to the rotational axis of the workpiece, the rake surface of the cutting insert in each cutting tool faces downward. Accordingly, by feeding the tool post in the up-down direction to align the height of the cutting edge of the cutting insert with the core height of the workpiece W and, in such state, feeding the tool post in a lateral direction (including an orthogonally lateral direction) to perform cutting, chips can be discharged in the naturally falling direction thereof.

### Brief Description of Drawings

Fig. 1A is a front view, Fig. 1B is a side view, and Fig. 1C is an end view, showing a cutting insert according to an embodiment of the present invention.
Fig. 2A is a front view, Fig. 2B is a rear view, Fig. 2C is a side view, and Fig. 2D is an end view, showing a state in which the cutting insert is held on a holder.
Fig 3 is a front view showing how parting and grooving processes are performed by a cutting tool.
Fig. 4 is a schematic cross-sectional view showing the shapes of various types of rake surfaces in the cutting insert.
Fig. 5 is a front view showing a plurality of cutting tools attached to a tool post.
Fig. 6 is a front view showing a positional relationship between a cutting tool attached to the tool post and a workpiece.
Fig. 7 is a front view showing a cutting insert according to a modification of the present invention.

### Detailed Description

An embodiment of the present invention will now be described below with reference to the attached drawings.

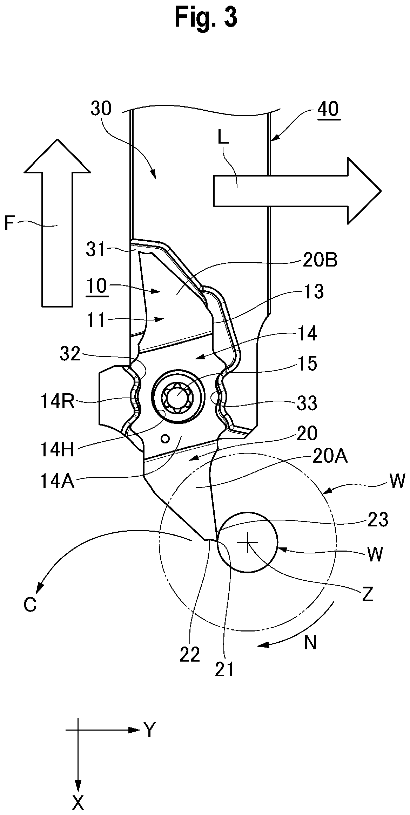

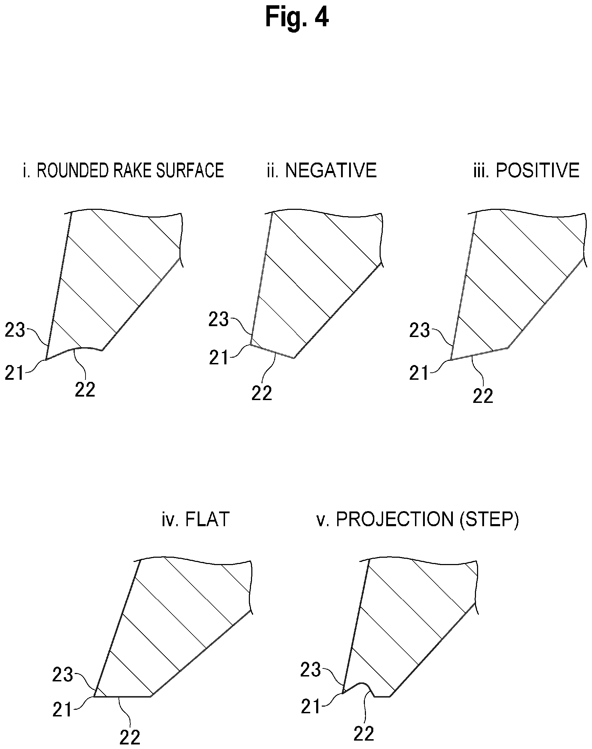

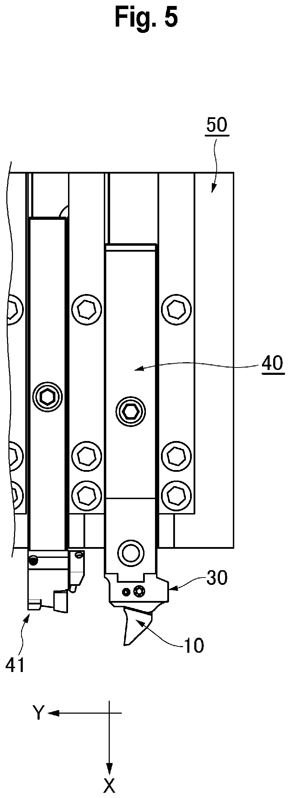

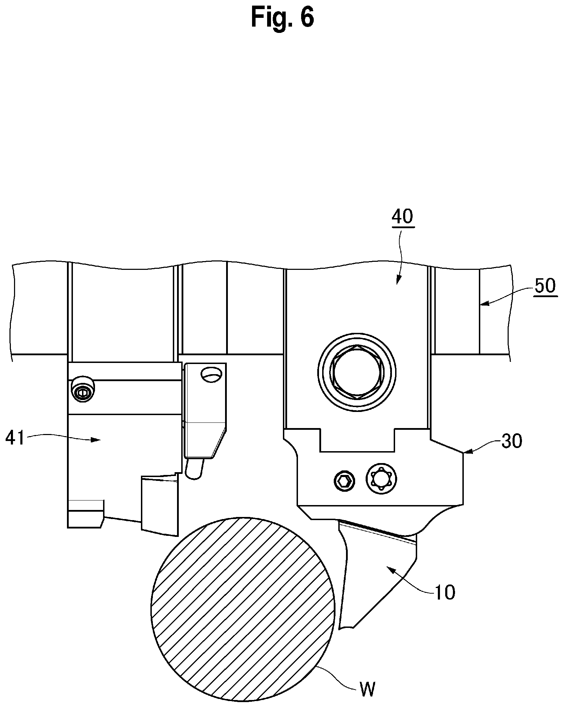

Figs. 1A to 1C show a cutting insert 10 according to an embodiment of the present invention. Figs. 2A to 2D show a cutting tool 40 which is configured such that a holder 30 holds the cutting insert 10. Fig. 3 shows how parting and grooving processes are performed by the cutting tool 40. Fig. 4 shows the shapes of various types of rake surfaces in the cutting insert 10. Fig. 5 shows a state in which the cutting tool 40 is attached to a tool post 50 of a cutting machine, together with another, adjacent cutting tool 41. Fig. 6 shows a positional relationship between the cutting tool 40 attached to the tool post 50 and a workpiece W.

In the present specification, in front views showing the tool post 50 to which the cutting tool 40 is attached (Figs. 3 and 6), the up-down direction that is orthogonal to the rotational axis (Z axis) of the workpiece W is defined as an X direction, and the horizontal direction is defined as a Y direction. The X direction and the Z direction correspond respectively to an X-axis direction and a Z-axis direction of a lathe, etc.

The cutting insert 10 according to the present embodiment may be, for example, a cutting insert intended for a parting process in which a cutting edge is pressed against a rotating workpiece W in a radial direction (a direction that is orthogonal to the rotational axis of the workpiece W) to remove an unnecessary portion of the workpiece and divide the workpiece. However, the present invention is not limited thereto, and is widely applicable to other types of cutting inserts and cutting tools, such as, for example, a cutting insert intended for a cutting process for cutting the outer diameter of a workpiece by pressing the cutting edge in a direction parallel to the rotational axis of the workpiece.

As shown in Figs. 1A to 1C, the cutting inset 10 has a first end surface 11, a second end surface 12, and a peripheral side surface 13 connecting the first end surface 11 and the second end surface 12. The peripheral side surface 13 is parallel to a direction along a hole axis of a clamp hole 14H (described later).

The cutting insert 10 has: a body part 14 that includes a clamp hole 14H extending through the first end surface 11 and the second end surface 12; and cutting edge parts 20 on the lateral sides of the body part 14. The cutting edge parts 20 each have a cutting edge 21 formed in an acute angle part of the peripheral side surface 13.

The cutting edge 21 includes: a front cutting edge formed at an intersecting edge between a rake surface 22 (described later) and a flank 23 (described later); and a lateral cutting edge formed at an intersecting edge between the rake surface 22 and the first end surface 11 (as well as the second end surface 12).

The cutting insert 10 is fixed and held on a mounting seat 31 of the holder 30 by screwing a fastening screw 15 that has been inserted into the clamp hole 14H of the body part 14 into an internal thread provided in the holder 30.

In order for the body part 14 of the cutting insert 10 to be fixed and held on the mounting seat 31 of the holder 30 using the fastening screw 15, the body part 14 includes: a fastening surface 14 at a central part of the first end surface 11, the fastening surface 14A having an insertion hole into which the fastening screw 15 is to be inserted; and a seating surface 14B at a central part of the second end surface 12, the seating surface 14B being seated on the mounting seat 31 of the holder 30. In the present embodiment, the fastening surface 14A is formed so as to be raised with respect to its surrounding portion in the first end surface 11, and the seating surface 14B is formed so as to be raised with respect to its surrounding portion in the second end surface 12.

The body part 14 of the cutting insert 10 is provided with irregularly-formed parts 14R respectively at two portions which are parts of the peripheral side surface 13, the two portions intersecting the fastening surface 14A and the seating surface 14B and facing each other in a direction orthogonal to the shorter direction of each of the first end surface 11 and the second end surface 12. The irregularly-formed parts 14R engage respectively with irregularly-formed engaging parts 32, 33 that are provided, in an upstanding wall-like form, to the mounting seat 31 of the holder 30 on which the cutting insert 10 is held.

The cutting insert 10 is formed in a substantially parallelogram shape in which the contour shape of each of the first end surface 11 and the second end surface 12 has a longitudinal direction and a shorter direction. More specifically, the cutting insert 10 is 180-degrees rotationally symmetrical with respect to the hole axis of the clamp hole 14H of the body part 14. In the cutting insert 10, a portion corresponding to the central portion in the longitudinal direction and in the shorter direction is defined as the body part 14, and a portion located on one side of the body part 14 and formed continuously with the body part 14 along the longitudinal direction of the cutting insert 10 is defined as a first cutting part 20A, and a portion located on the other side of the body part 14 and formed continuously with the body part 14 is defined as a second cutting part 20B. That is to say, the cutting insert 10 has two acute angle parts at two opposite ends of the peripheral side surface 13, and each of the first cutting part 20A and the second cutting part 20B constitutes the above-described cutting edge part 20 and has the cutting edge 21 for cutting a workpiece W at an acute angle part of such cutting edge part 20.

In the cutting insert 10, the longitudinal direction and the shorter direction of the first end surface 11 and the second end surface 12 that are formed in a substantially parallelogram shape coincide respectively with the longitudinal direction and the shorter direction of the cutting insert 10.

In the cutting insert 10, the first cutting part 20A and the second cutting part 20B are rotationally symmetrical to each other with respect to the hole axis of the clamp hole 14H; therefore, the following description will describe the first cutting part 20A, as a representative of the first cutting part 20A and the second cutting part 20B.

In the first cutting part 20A (as well as in the second cutting part 20B), the above-described intersecting edge, which connects a leading-end part in the longitudinal direction of each of the first end surface 11 and the second end surface 12 to a leading-end part of the peripheral side surface 13 and which is located in the vicinity of the apex of the acute angle of the parallelogram shape of the first end surface 11 and the second end surface 12, serves as the cutting edge 21 (the second cutting part 20B also has the cutting edge 21).

In addition, in the first cutting part 20A (as well as the second cutting part 20B), two surfaces, which are portions of the peripheral side surface 13 that are connected to the leading-end part in the longitudinal direction of each of the first end surface 11 and the second end surface 12 and which intersect with the above-described cutting edge 21 (intersecting edge), serve as a rake surface 22 and a flank 23 (the second cutting part 20B also has the rake surface 22 and the flank 23). In this configuration, in the cutting insert 10, the surface that faces the longitudinal direction of the first end surface 11 and the second end surface 12 (i.e., the surface that may be, for example, perpendicular to the longitudinal direction) serves as the rake surface 22, and the surface that faces the direction that is orthogonal to the longitudinal direction of the first end surface 11 and the second end surface 12 (i.e., the surface that may be, for example, parallel to the longitudinal direction) serves as the flank 23. It should be noted that, as described earlier, the flank 23 is also formed on the first end surface 11 and the second end surface 12.

The rake surface 22 may have various three-dimensional shapes. For example, the rake surface 22 may have a rounded (curved) shape, a negative shape having an intersection angle of more than 90 degrees with respect to the flank 23, a positive shape having an intersection angle of less than 90 degrees with respect to the flank 23, a shape having a flat part at a portion thereof, a stepped shape having a projected portion, etc., as shown in the cross-sectional views in Fig. 4.

As shown in Figs. 2A to 2D and 3, the cutting insert 10 is held at a leading-end part of the holder 30 in a state in which the first end surface 11 and the second end surface 12 protrude outwardly along the longitudinal direction of the holder 30, when the cutting insert 10 is held at the leading-end part of the holder 30 by using the fastening screw 15.

Here, the holder 30 may have, for example, a quadrangular bar-like shape having a quadrangular cross-sectional shape, and includes the mounting seat 31 for the cutting insert 10 at the leading-end part in the longitudinal direction thereof. The holder 30 has a recessed portion which is formed by cutting out a portion from the leading-end part thereof, and such recessed portion serves as the mounting seat 31. The mounting seat 31 can accommodate one of the first cutting part 20A and the second cutting part 20B, part of the peripheral side surface 13, and the body part 14 of the cutting insert 10, and the mounting seat 31 has a flat seating surface on which the seating surface 14B of the cutting insert 10 is seated. The holder 30 is provided with the internal thread into which the fastening screw 15 that has been inserted into the clamp hole 14H of the body part 14 is to be inserted, and the internal thread extends in a direction orthogonal to the seating surface of the mounting seat 31.

The holder 30 includes irregularly-formed engaging parts 32, 33 that are provided, in an upstanding wall-like form, at two portions that face each other with the mounting seat 31 therebetween and are located on the lateral sides of the clamp hole 14H along the shorter direction of the cutting insert 10 that is seated and held on the mounting seat 31. The irregularly-formed engaging parts 32, 33 of the holder 30 engage with the two irregularly-formed parts 14R that are provided on the cutting insert 10 that is seated on the mounting seat 31, so as to stabilize the mounting position of the cutting insert 10 with respect to the holder 30 without allowing the cutting insert 10 to move in the longitudinal direction and the shorter direction of the holder 30 that are orthogonal to the screw axis of the internal thread provided in the holder 30.

In this way, when the cutting insert 10 is mounted on the holder 30, the cutting insert 10 and the holder 30 constitute the cutting tool 40. The holder 30 of the cutting tool 40 is attached to the tool post 50 of a cutting machine as shown in Fig. 5, so that the cutting tool 40 becomes usable for cutting the workpiece W.

In the cutting tool 40, the cutting edge part 20 (the first cutting part 20A and the second cutting part 20B) of the cutting insert 10 and the rake surface 22 included in the cutting edge part 20 are spaced on the inner side away from a straight line L that circumscribes the peripheral side surface 13, along the longitudinal direction of each of the first end surface 11 and the second end surface 12, as shown in Figs. 1A to 1C.

As shown in Figs. 1A to 1C and 2A to 2D, in the cutting tool 40, the thickness t1 of a portion that forms the body part 14 between the first end surface 11 and the second end surface 12 of the cutting insert 10 is set so as to be smaller than the thickness T of the holder 30 along the hole axis of the clamp hole 14H. The thickness of a portion that forms the cutting edge part 20 in the cutting insert 10 is tapered so that such thickness gradually decreases from the side of the cutting edge part 20 (the first cutting part 20A and the second cutting part 20B) toward the body part 14, and the thickness t2 of the cutting edge 21 is t1 > t2.

The following description will now describe a procedure in which the cutting tool 40 constituted by the cutting insert 10 and the holder 30 of the present embodiment is attached to the tool post 50 to cut a workpiece W (Figs. 3, 5 and 6).
(1) The cutting tool 40 is attached to the tool post 50 of a machine tool that is provided so as to be moveable in the up-down direction (X direction) and the horizontal direction (Y direction) that are orthogonal to the rotational axis (Z axis) of the workpiece W. The machine tool (lathe, etc.) requires a machine that can also be moved in the Y-axis direction, in addition to the X-axis and Z-axis directions that are commonly employed.
   In the present embodiment, the cutting insert 10 is held on the holder 30 such that the rake surface 22 faces downward and the flank 23 faces laterally, in a state in which the cutting tool 40 is attached to the tool post 50.
(2) The tool post 50 to which the cutting tool 40 is attached as described in (1) above is moved in the X-axis direction so as to align the height of the cutting edge 21 in the cutting tool 40 with the core height of the workpiece W, as a standby state. The tool post 50 is then fed in the Y-axis direction so as to approach the rotational axis (Z axis) of the workpiece W that is rotated in the N direction, so as to cause the cutting edge 21 located at a side of the workpiece W to cut the workpiece W.

At this time, the principal force F of the cutting force involved in the cutting of the workpiece W acts upward along the longitudinal direction of the holder 30 that is arranged substantially vertically. Since the rake surface 22 faces downward, chips C discharged from the workpiece W naturally fall downward or diagonally downward from a side of the workpiece W due to the action of gravity. When considering chip control, it is more advantageous that the holder 30 is arranged substantially vertically as in the present embodiment, rather than being arranged horizontally.

Accordingly, the present embodiment provides the following advantageous effects.
(a) The cutting insert 10 is provided with the rake surface 22 that faces the longitudinal direction of each of the first end surface 11 and the second end surface 12, in at least a portion of the peripheral side surface 13. Accordingly, the principal force F of the cutting force that acts on the rake surface 22 acts in the longitudinal direction of the cutting insert 10, and it is difficult to deflect such cutting tool 40 that includes such cutting insert 10 and its stiffness can be improved. In addition, in the machine tool in which the tool post 50 is arranged on the upper side with respect to the central axis of the workpiece W, chips are discharged in a direction along the longitudinal direction of the cutting insert 10 (downward), so that the chip control can be improved. It should be noted that the tool post 50 is typically arranged on the upper side in many machine tools.
(b) The cutting insert 10 is provided with the rake surface 22 at both end portions (i.e., one end portion and the other end portion), along the longitudinal direction of the substantially parallelogram shape. Such configuration makes it possible to sequentially use two rake surfaces 22 by re-mounting the cutting insert 10 on the holder 30, which is economically efficient.

When the cutting insert 10 is re-mounted as described in section (b) above, the cutting insert 10 is mounted in a 180 degrees-inverted manner with respect to the mounting seat 31 of the holder 30.

(c) In the cutting insert 10, the irregularly-formed parts 14R are each provided at a portion of the peripheral side surface 13 which intersects with the shorter direction of each of the first end surface 11 and the second end surface 12. Such configuration makes it possible to allow the cutting insert 10 to be securely held on the holder 30 without being displaced due to the engagement effect between the above-described irregularly-formed parts 14R and the corresponding irregularly-formed engaging parts 32, 33 of the holder 30, when the principal force F of the cutting force that acts on the rake surface 22 acts axially on the holder 30.

(d) In the cutting insert 10, the rake surface 22 is spaced on the inner side away from the straight line L (Figs. 1A to 1C) that circumscribes the peripheral side surface 13 along the longitudinal direction of the first end surface 11. Such configuration makes it possible to locate the rake surface 22 of the cutting insert 10 within the width dimension K (Figs. 2A to 2D) that intersects the longitudinal direction of the holder 30, when the cutting insert 10 is mounted on the holder 30 such that the longitudinal direction of the cutting insert 10 is aligned with the longitudinal direction of the holder 30. Therefore, the cutting process can be performed with part of the workpiece W being located within the width dimension K of the holder 30, which makes it possible to draw even a large workpiece W into the space between adjacent cutting tools 40, to thereby allow a parting process to be performed in a small space (Fig. 3).

The force that is applied by the workpiece W to the cutting insert 10 and the holder 30 only includes compression force, with no action of bending force, which is advantageous in terms of stiffness.

(e) In the cutting tool 40, the above-described advantageous effects (a) to (d) can be achieved.

(f) In the cutting tool 40, the cutting insert 10 is held at the leading-end part of the holder 30 in a state in which the cutting insert 10 protrudes outwardly along the longitudinal direction of the holder 30, and the cutting insert 10 has the rake surface 22 at the leading-end part thereof in the longitudinal direction, with the rake surface 22 facing the longitudinal direction. Accordingly, the cutting insert 10 does not protrude laterally from the holder 30 so as to approach the adjacent cutting tool 40, which makes it possible to reduce the size of the space occupied by the cutting tool 40 that is constituted by the holder 30 and the cutting insert 10. Therefore, in an automatic lathe, etc. that is installed with a large number of cutting tools 40 for machining a workpiece W into complicated shapes, it is possible to easily avoid interference between the workpiece W and a tool, as well as interference between adjacent tools.

(g) In the cutting tool 40, when holders 30 for a plurality of cutting tools 40, 41 are attached to the tool post provided so as to be movable in two directions orthogonal to the rotational axis (Z axis) of the workpiece W, the rake surface 22 of the cutting insert 10 in each of the cutting tools 40, 41 faces downward. Accordingly, by feeding the tool post 50 in the up-down direction so as to align the height of the cutting edge 21 of the cutting insert 10 with the core height of the workpiece W and, in such state, feeding the tool post 50 in a lateral direction (including an orthogonally lateral direction), chips can be discharged in the naturally falling direction thereof.

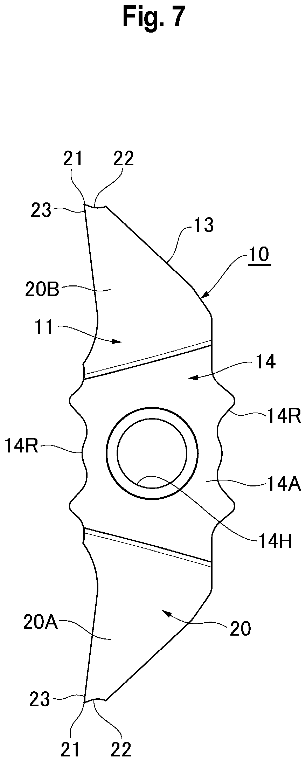

Although the embodiments of the present invention have been described in detail while referring to the drawings, the specific configuration of the present invention is not limited to those embodiments, and design modifications, etc. without departing from the gist of the present invention are also encompassed in the present invention. For example, the cutting insert 10 according to the present invention may be formed in a mirror-symmetrical shape in a plan view as viewed in a direction orthogonal to the first end surface 11 and the second end surface 12, as shown in Fig. 7.

According to the present invention, it is possible to improve the stiffness of a cutting tool that has a cutting insert and reduce the size of the space occupied by such cutting tool.

## Claims

1. A cutting insert, comprising a first end surface, a second end surface, and a peripheral side surface that connects the first end surface and the second end surface and includes a cutting edge, wherein:
a contour shape of each of the first end surface and the second end surface has a longitudinal direction and a shorter direction; and
a rake surface is provided in at least a portion of the peripheral side surface, the rake surface facing the longitudinal direction of each of the first end surface and the second end surface.

2. The cutting insert according to claim 1, wherein the rake surface is provided in at least a portion of the peripheral side surface on one side and a portion of the peripheral side surface on the other side along the longitudinal direction of each of the first end surface and the second end surface.

3. The cutting insert according to claim 1 or 2, wherein the cutting insert is 180-degrees rotationally symmetrical in a plan view as viewed in a direction orthogonal to the first end surface.

4. The cutting insert according to any one of claims 1 to 3, wherein a contour shape of each of the first end surface and the second end surface is a substantially parallelogram shape having a longitudinal direction and a shorter direction.

5. The cutting insert according to any one of claims 1 to 4, wherein the cutting insert is formed in a mirror-symmetrical shape in a front view as viewed in a direction orthogonal to the first end surface.

6. The cutting insert according to any one of claims 1 to 5, wherein the cutting insert comprises at least one irregularly-formed part formed in an irregular shape, the irregularly-formed part being provided at a portion of the peripheral side surface that intersects with the shorter direction of each of the first end surface and the second end surface.

7. The cutting insert according to any one of claims 1 to 6, wherein the rake surface is located so as to be spaced on an inner side away from a straight line that circumscribes the peripheral side surface along the longitudinal direction of the first end surface.

8. A cutting tool, comprising the cutting insert according to any one of claims 1 to 7, and a holder on which the cutting insert is held.

9. The cutting tool according to claim 8, wherein the cutting insert is held at a leading-end part of the holder in a state in which the cutting insert protrudes outwardly along a longitudinal direction of the holder, and the cutting insert has a rake surface at a leading-end part thereof in a longitudinal direction, the rake surface facing the longitudinal direction.
